**Europäisches Patentamt**

**European Patent Office**

**Office européen des brevets**

(19)

(11) Publication number : **0 389 172 B1**

(12) # EUROPEAN PATENT SPECIFICATION

(45) Date of publication of patent specification :
**18.10.95 Bulletin 95/42**

(51) Int. Cl.⁶ : **G02B 6/28,** G02B 6/12

(21) Application number : **90302733.2**

(22) Date of filing : **14.03.90**

(54) **Adiabatic polarization manipulating device.**

(30) Priority : **23.03.89 US 327851**
**14.11.89 US 437049**

(43) Date of publication of application :
**26.09.90 Bulletin 90/39**

(45) Publication of the grant of the patent :
**18.10.95 Bulletin 95/42**

(84) Designated Contracting States :
**DE FR GB**

(56) References cited :
**US-A- 4 669 815**
**US-A- 4 701 009**
**US-A- 4 763 977**
**PATENT ABSTRACTS OF JAPAN, vol. 8, no.**
**219 (P-306)(1656) 5October 1984; & JP-A-59**
**102 203**
**PATENT ABSTRACTS OF JAPAN, vol. 8, no.**
**151 (P-286)(1588)13 July 1984; & JP-A-59 048**
**713**

(56) References cited :
**PATENT ABSTRACTS OF JAPAN, vol. 6, no.**
**209 (P-150)(1087)21 October 1982; & JP-A-57**
**114 111**
**IEEE Journal of Quantum Eletronics,**
**Vol.QE11, No. 1, pages 32 - 39**
**The Trans. of the IECE of Jap. Feb 85**

(73) Proprietor : **AT & T Corp.**
**32 Avenue of the Americas**
**New York, NY 10013-2412 (US)**

(72) Inventor : **Henry, Charles Howard**
**52 Dogwood Lane**
**Skillman, New Jersey 08558 (US)**
Inventor : **Kazarinov, Rudolf Feogor**
**606 Stangle Road**
**Martinsville, New Jersey 08836 (US)**
Inventor : **Shani, Yosi**
**443 Central Avenue**
**Murray Hill, New Jersey 07974 (US)**

(74) Representative : **Watts, Christopher Malcolm**
**Kelway, Dr. et al**
**AT&T (UK) LTD.**
**AT&T Intellectual Property Division**
**5 Mornington Road**
**Woodford Green Essex IG8 OTU (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 389 172 B1

## Description

## Background of the Invention

This invention relates to TE-TM polarization manipulating (i.e., splitting, combining or filtering) devices and, more particularly, to integrated optic versions of such devices constructed from substrate-supported thin film waveguides.

In many important applications, such as coherent lightwave receivers and polarization independent optical isolators and circulators, it is necessary in some designs to separate the transverse electric (TE) mode from the transverse magnetic (TM) mode. In designs using bulk optics the polarization splitting device is typically a birefringent calcite cube, but such bulk devices have problems of mechanical and thermal stability. In addition, they are generally inappropriate for integrated optics where more sophisticated designs have been implemented in order to achieve small size and compatibility with integrated optics components (e.g., semiconductor lasers and photodiodes).

One integrated optics polarization splitter has been proposed by M. Masuda et al in an article entitled "An Optical TE-TM Mode Splitter Using a LiNbO$_3$ Branching Waveguide", Applied Physics Letters, Vol. 37, No. 1, p. 20 (1980). This device included LiNbO$_3$ linear, multimode waveguide segments formed in the shape of a Y. To excite the fundamental mode, a prism coupler was required. The core of the entire waveguide was made of Ti-diffused LiNbO$_3$, but half (viewed axially) of the main waveguide and one of the branches were clad with a dielectric film (Al$_2$O$_3$) having a metal electrode thereon; the other half of the main waveguide and the other branch were free of such cladding. Because of the partial cladding with the dielectric film, the clad half waveguide had a refractive index larger than that of the unclad half. In the absence of an applied voltage to the electrode, both TE and TM modes were confined in the clad half of the main waveguide. When a large enough voltage was applied (e.g., 20 V) to overcome the refractive index difference between the halves of the main guide for the ZZ mode, then confinement of the ZZ mode took place in the unclad half of the main guide. But, the TM mode was still confined to the clad half because it was less sensitive to the voltage than the TE mode. Thus, TE-TM mode splitting was possible upon the application of an appropriate voltage. For example, the TE mode propagated into the unclad branch of the Y, whereas the TM mode propagated in the clad branch of the Y. However, the extinction ratio was relatively low (<10 dB).

This type of mode splitting device is disadvantageous and leaves many problems unresolved: (1) it is an active device requiring the application of relatively large voltage with the attendant need for a power supply and its associated cost; (2) it is fabricated in LiNbO$_3$ rather than semiconductors and dielectrics preferred for integrated optics such as silicon compounds or Group III-V compounds; (3) it utilizes a separate prism coupler to excite the fundamental mode; (4) the Y-branch has a large branching angle of 2.86°; it is therefore not adiabatic; that is, it excites modes in the output branches other than the fundamental mode; and (5) it is incompatible with single mode waveguide technology.

On the other hand, H. Yajima describes a thin-film optical branching glass waveguide in Applied Physics Letters, Vol. 22., No. 12, pp.647-649 (1973) which addresses the effect of the large angle between branching waveguides. A tri-layered structure of glass - SiO$_2$ - glass was sputtered onto a substrate so that the edge of the SiO$_2$ layer was tapered to a slope of 1:500. From this shallow taper one can infer that mode transitions between the main glass waveguide (ARM NO. 1) and the branching glass waveguides (ARM NO. 2 and NO. 3) are adiabatic. Both mode filtering and mode conversion were observed for TE modes, but mode splitting, combining or filtering between TE and TM modes was neither observed nor suggested.

Thus, there remains a need for an integrated polarization splitter, and the corollary polarization combiner and filter, which alleviates the remaining problems of the prior art.

JP-A-59-102203 describes (as prior art) a polarization separation device comprising a Y-shaped optical waveguide formed in an A-cut lithium niobate substate. One branch of the Y is doped with silver and the other with titanium. The stem is doped with both silver and titanium. Such a device is also disclosed in Transactions of the IECE of Japan, vol E68, no.2, February 1985.

US-A-4763977, US-A-4701009 and IEEE Journal of Quantum Electronics, vol QE-11, no.1, January 1975 disclose various forms of adiabatic waveguide branch.

## Summary of the Invention

The invention is defined in claim 1. In accordance with one aspect of the invention, a polarization manipulating device is fabricated from at least two substrate-supported, thin film waveguides having cores of different materials and different refractive indices. A 3-port version of the device has a first section which includes a first waveguide core, a second section having at least one pair of branches where the cores are physically separate and optically decoupled from one another, and a transition section where the cores overlap and then gradually separate from one another so as to adiabatically couple the first section to the second section. The refractive indices of the core materials are designed so that, when considering the waveguide modes of the "system" (i.e., of the combination of waveguides viewed as a whole) one branch of the second section has the highest effective refractive index for the TE mode and the other branch has the highest effective refractive index for the TM mode.

The term adiabatic implies that once a relatively high refractive index system mode is excited, energy stays in that mode and does not convert to a lower index system mode (and conversely), although the waveguide and/or mode may change shape and/or refractive index in undergoing the adiabatic transition. This principle, and the relationship between waveguide modes and system modes, will be explained more fully hereinafter.

In a polarization splitter embodiment of the invention, the first section is an input section and the branches of the second section are output branches. On the other hand, in a polarization combining or filtering device, the first section is an output section and the branches of the second section are input branches. When functioning as a combiner, the TE and TM modes combine in the transition section and propagate out of the output section, but as a filter any mode (TE or TM) applied to an input branch which does not have its highest effective refractive index for that mode, would be radiated out of the device and no significant energy would propagate in the output section, provided that the output section is either (1) designed not to support that mode, or (2) is coupled to a device (e.g., a single mode fiber) which does not support that mode.

In a preferred embodiment, the end of one of the waveguides in the transition section is adiabatically tapered.

In silicon "optical bench" technology, the thin film waveguides advantageously have silica claddings and either doped silica cores or silicon nitride cores, or both.

Yet another embodiment of the invention is a 4-port device which incorporates the above-described 3-port device along with another pair of thin film waveguide branches coupled to the first section. One of these branches has a higher effective refractive index than the other for both TE and TM modes. As a result, TE or TM mode signals are either coupled straight through the device from one input port to a directly opposite output port, or they are coupled via a cross-over path from one input port to a diagonally opposite output port.

## Brief Description of the Drawing

The invention, together with its various features and advantages, can be readily understood from the following more detailed description taken in conjunction with the accompanying drawing in which, in the interest of simplicity and clarity, the figures have not been drawn to scale.

FIG. 1 is a schematic top view of a 3-port polarization splitting, combining or filtering device in accordance with various embodiments of the invention. For clarity of illustration, the top cladding layer is not shown so as to expose the underlying cores.

FIG. 2 is a cross section of first (e.g., input) section 14 and branch 10.2 of the second (e.g., output) section of FIG. 1 taken along lines 2-2, but with the cladding 10.4 added for completeness.

FIG. 3 is a cross section of branch 12.2 of the second (e.g., output) section of FIG. 1 taken along line 3-3, but with the cladding 12.4 added for completeness.

FIG. 4 is a cross section of the transition section 18 of FIG. 1 taken along line 4-4, but with the cladding 10.4, 12.4 added for completeness.

FIG. 5 is a graph of effective refractive index versus core thickness of a birefringent thin film waveguide useful in explaining the operation of one embodiment of the invention.

FIG. 6, Part D is a schematic top view of the waveguide cores of FIG. 1, and Parts A-C and E-H show the effective refractive index for the various modes of the device in different parts of the structure.

FIG. 7 is a block-diagrammatic view of a 4-port polarization splitting, combining or filtering device in accordance with another embodiment of the invention.

FIG. 8 is a schematic top view of one embodiment of the device of FIG. 7 in which, for clarity of illustration, the top cladding is not shown so as to expose the underlying cores.

FIG. 9 is a graph showing how mode effective refractive index $\underline{n}$ varies along the propagation direction (z) in the device of FIG. 8.

FIG. 10 is a cross-section of the transition section 118 of FIG. 8 taken along line 10-10, but with the cladding 112 added for completeness.

FIGS. 11 and 12 show the quantum mechanical modes associated with the potential of a particle in a box for an abrupt transition in potential V (FIG. 11) and for a gradual (adiabatic) transition (FIG. 12).

FIG. 13 shows the modes associated with the effective refractive index $\underline{n}$ of light propagating in a dielectric waveguide; it is useful in defining the term "adiabatic" as it applies to gradual transitions of waveguide parameters.

## Detailed Description

Adiabatic Transitions

Before discussing the invention in detail, it will be helpful to define the term "adiabatic". To do so we will make an analogy between the energy levels of a particle in a box (i.e., in a potential well) and the transverse modes of light propagating in a dielectric waveguide (i.e., in a refractive index well). These two phenomena can be described by similar Schroedinger wave equations where the potential V is replaced by the refractive index $\underline{n}$.

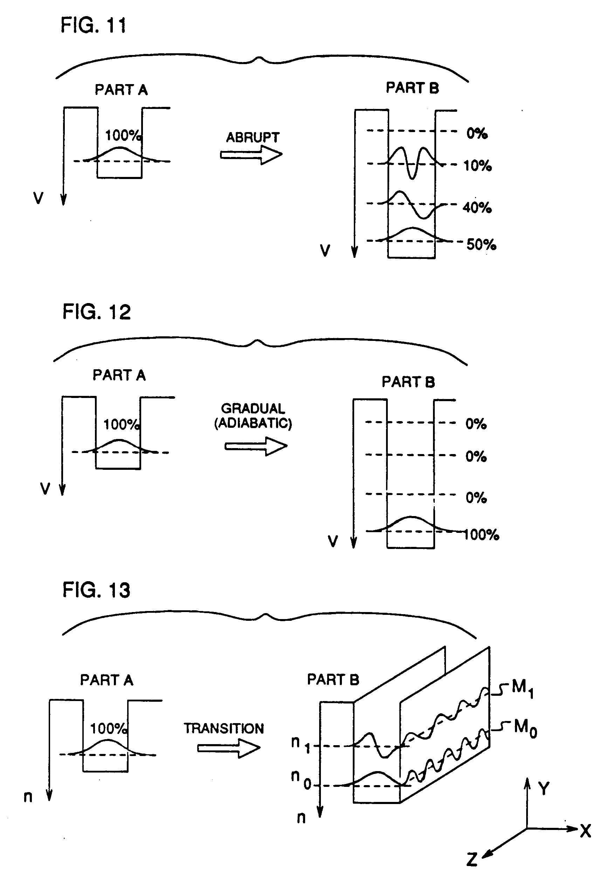

In general, a transition is said to be adiabatic in the quantum mechanical sense if the energy level occupation (mode occupation in the optical case) is conserved in passing through the transition. To be adiabatic the transition needs to be gradual, not abrupt. Consider first a non-adiabatic, abrupt change in potential associated with a particle in a box, as shown in FIG. 11. Initially, all of the energy of the particle resides in a fundamental mode (FIG. 11, Part A), but after the potential (i.e., the bottom of the box) increases abruptly, the energy of the particle is split into more than one mode (illustratively into three modes, FIG. 11, Part B). In contrast, the result of an adiabatic transition of potential for the same particle is depicted in FIG. 12, Part B; ideally all of the energy which started out in a fundamental mode (FIG. 12, Part A) is still all in the fundamental mode after the transition (FIG. 12, Part B). The latter figure also demonstrates that, although the potential well can support more than one mode, energy need not be present in all of them.

To extend this analogy to the principles of light propagation in dielectric waveguides, we turn our attention to FIG. 13. As before, we assume that initially all of the energy propagating in the z-direction is contained in a fundamental transverse mode (FIG. 13, Part A). However, after undergoing a transition in a waveguide parameter (e.g., width, thickness, refractive index -- the latter is depicted in FIG. 13), we ask the question: under what conditions is the transition adiabatic; i.e., under what (ideal) conditions will all of the energy remain in a fundamental mode.

To answer this question, consider two lightwaves $M_0$ and $M_1$ propagating in a dielectric waveguide in the z-direction as shown in FIG. 13, Part B. Propagation of the fundamental mode $M_0$ is represented by $e^{i\beta_0 z}$ and of the first order mode $M_1$ by $e^{i\beta_1 z}$, where the propagation constant $\beta = 2\pi n/\lambda$. Thus, $M_0$ is shown as having a shorter wavelength in the dielectric due to its higher refractive index ($n_0 > n_1$) than $M_1$. These two waves will not couple to one another (i.e., transfer energy to one another) unless there is a sufficiently abrupt perturbation of a waveguide parameter to compensate for their difference in propagation constants $\Delta\beta = \beta_0 - \beta_1$. In an ideal adiabatic transition the perturbation is sufficiently gradual that no such compensation for $\Delta\beta$ occurs and hence no coupling between the modes takes place. What is "sufficiently gradual" is defined in terms of the beat length L between the modes, where L is proportional to $1/\Delta\beta$. To be adiabatic the changes (perturbation) should take place over a distance large compared to L. For example, in a branching waveguide structure at least the initial branching angle, where the waveguides are still optically coupled to one another, should be less than about one degree; or the taper of the width of a waveguide should exhibit similarly small angles. A corollary to this principle is that, if the waveguides are designed to have larger mode splitting (i.e., larger $\Delta\beta$), then the beat length will be shorter and the parameter transitions can be made to be adiabatic over a shorter distance, which means that smaller adiabatic devices suitable for integrated applications are feasible.

3-Port Device:

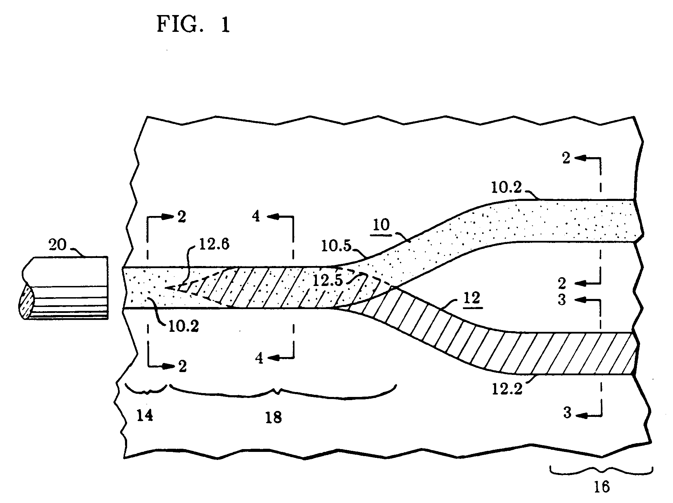

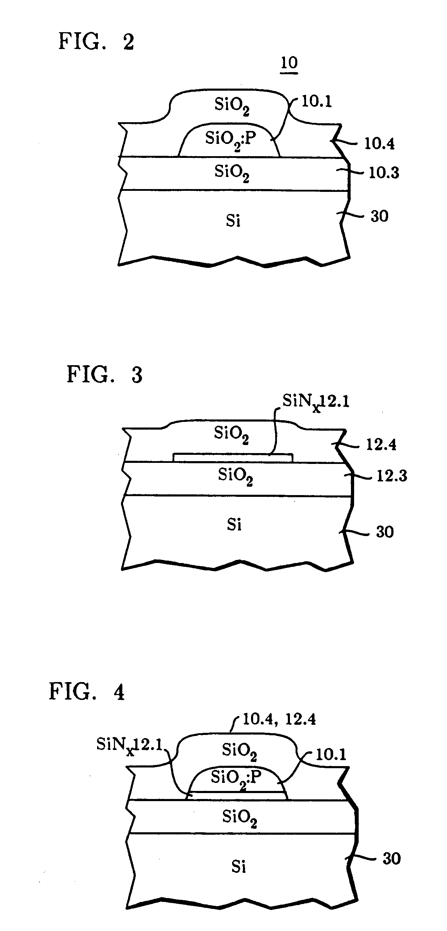

Although the invention relates to passive optical polarization splitting, combining and/or filtering devices, initially we describe for simplicity only a 3-port polarization splitting device in conjunction with FIGS.. 1-5. Turning now to FIG. 1, there is shown such a polarization splitting device fabricated from at least two substrate-supported, thin-film waveguides 10 and 12 having cores 10.1 and 12.1, respectively, as shown in FIGS. 2 and 3. The waveguides may be designed to support only a single (i.e., fundamental) mode or to support multiple modes, but in the latter case it may be preferable that some other part of the apparatus/system filter out higher order modes. This filtering function could be performed, for example, by a single mode optical fiber coupled to the multimode waveguide(s).

For purposes of definition, the TE polarization has the transverse electric field parallel to the substrate, whereas TM polarization has the transverse electric field perpendicular to the substrate.

Returning to FIG. 1, the device has a first (i.e., input) section 14 which includes waveguide core 10.2, as shown in FIG. 2, a second (i.e., output) section 16 where the cores are physically separate and optically decoupled, and a transition section 18 where the cores overlap and then gradually separate from one another so as to adiabatically couple the input section 14 to the output section 16.

The refractive indices of the core materials are designed so that, when TE and TM modes are excited in the input section, as by radiation coupled from optical fiber 20, essentially only the TM mode is coupled into output branch 10.2 and essentially only the TE mode is coupled into output branch 12.2. More specifically, this form of TE-TM polarization splitting is achieved provided that the birefringence of the waveguide 12 is greater than and straddles the birefringence, if any, of waveguide 10; that is,

$$n_{TM12} < (n_{TM10}, n_{TE10}) < n_{TE12}, \quad (1)$$

where $\underline{n}$ is the effective refractive index, TMi and TEi designate the fundamental transverse magnetic and electric optical modes in the ith (i=10,12) waveguide. Preferably, the refractive indices of the waveguide 10 are about halfway between those of the waveguide 12. This design enhances the efficiency of the adiabatic transition which is dependent on the refractive index difference between the waveguides for a given polarization. The halfway design ensures that the cross-talk, coupling of an unwanted polarization into a particular output waveguide, is suppressed by about the same amount in both output waveguides.

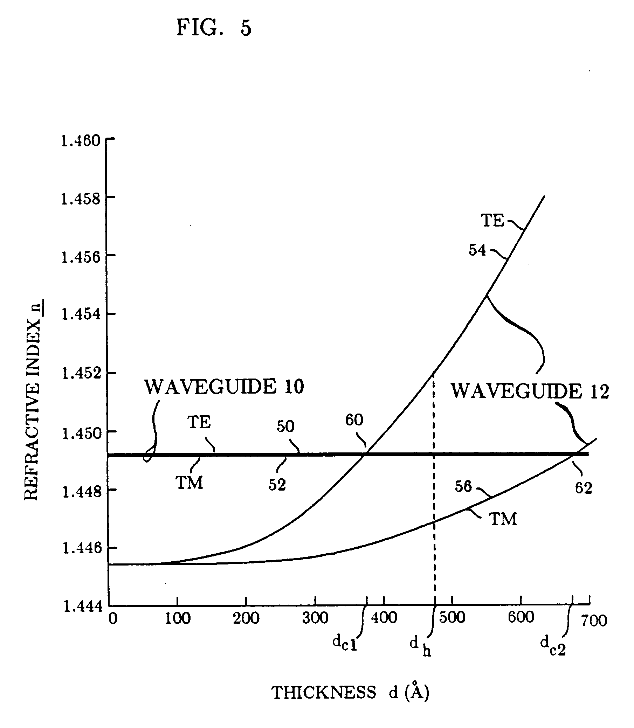

Although it is not essential, it is advantageous to have thin-film waveguides which are nearly polarization independent to match conventional polarization independent fibers. This characteristic can be achieved by having nearly square cores, or small core-cladding refractive index differences, in the waveguides. Thus, the waveguide 10 is nearly polarization independent, but the waveguide 12 is highly polarization dependent. This situation is depicted in FIG. 5. Lines 50 and 52 represent the refractive indices of the TE and TM modes, respectively, in waveguide 10. That lines 50 and 52 are nearly coincident indicates that waveguide 10 is essentially polarization independent (i.e., it has little, if any, birefringence). Lines 54 and 56, on the other hand, represent the refractive indices of the TE and the TM modes of waveguide 12. That lines 54 and 56 diverge indicates the strong dependence upon thickness of the core.

In order for the birefringence of waveguide 12 to straddle that of waveguide 10, however, the waveguides must be designed so that the device parameters fall between crossover points 60 and 62; that is, for a particular set of materials and dimensions, the waveguide 12 should have a thickness between about $d_{c1}$ and $d_{c2}$. For single mode operation it is desirable that the thickness not be so large that the waveguide 12 supports more than one mode.

Given that the above criterion is satisfied, in a preferred embodiment of FIG. 1 the waveguides in the transition section 18 may adiabatically separate from one another according to any of several mathematical relationships with distance; for example, either a linear or cosine (i.e., essentially quadratic) relationship in zones 10.5 and 12.5 gives satisfactory performance.

In a preferred embodiment, however, the tip 12.6 of the core of waveguide 12 in the transition section 18 is adiabatically tapered to essentially zero in the direction toward the input of the input section 14. As shown in FIG. 1, the tip of the core has a tapered width, but the thickness of the tip of the core 12.1 may be tapered instead of, or in addition to, the width. As discussed above regarding the manner in which the waveguides separate, the tapered dimension of the tip may vary essentially quadratically or linearly with distance along the direction of mode propagation.

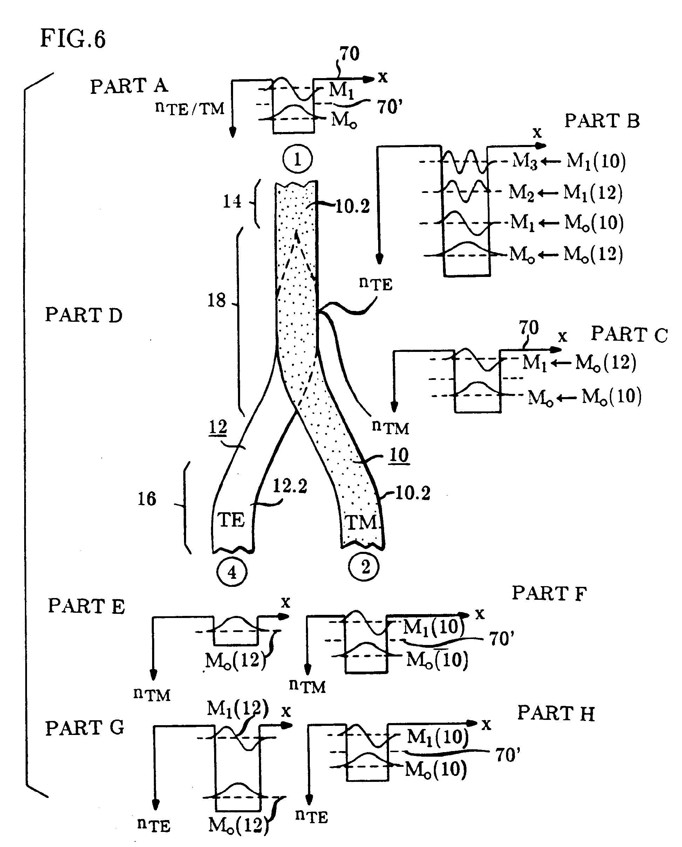

In operation of a multi-mode embodiment, waveguide 10.2 in the input section 14 supports both the fundamental mode $M_0$ and the first order mode $M_1$, as shown in FIG. 6, Part A for both TE and TM. Both $M_0$ and $M_1$ lie below the top 70 of the potential well defined by the $\underline{n}$ vs $\underline{x}$ profile. Even though the waveguide 10.2 is multimode, radiation from a source, such as optical fiber 20, should be coupled and aligned to the waveguide so that only $M_0$ and not $M_1$ is excited in the waveguide. Note, however, the waveguide of input section 14 can be designed to be a single mode waveguide; for example, by making the potential well sufficiently shallow that $M_1$ is above the new top 70' of the well; i.e., in this case $M_1$ would not be a bound mode and, therefore, it would radiate out of the waveguide 10.2.

In the output section 16 where the waveguides are completely separated, the modes for waveguide 12 are shown in FIG. 6, Part E for TM and Part G for TE. Similarly, the modes for waveguide 10 are shown in FIG. 6, Part F for TM and Part H for TE. Note that each waveguide is shown to support more than one mode, except for the TM mode in waveguide 12 where, for illustration purposes only, Part E shows that only the fundamental mode is bound (this waveguide could, however, also be multi-mode for TM). As above, however, if the input section 14 is made from a single mode waveguide, then so is waveguide 10.2 of the output section 16 since the waveguide 10.2 has the same core and cladding in both of these sections. Consequently, FIG. 6, Parts F and H, depicts that only $M_0$ is bound in the output section just as Part A depicts that only this mode is bound in the input section.

A comparison of only the four <u>fundamental</u> modes $M_0$ of FIG. 6, Parts E-H, indicates that in the output section 16 waveguide 12, being birefringent, has the highest effective refractive index for TE (Part G) and the lowest for TM (Part E), whereas waveguide 10, being non-birefringent, has effective refractive indices for TM (Part F) and TE (Part H) which are about the same. Moreover, the relative positions of the four modes show that the effective refractive indices of waveguide 12 for the fundamental modes straddle those of waveguide 10, as required by equation (1). Thus, if a lightwave signal of arbitrary polarization and fundamental mode is applied to input section 14, then the TM polarization is coupled to output waveguide 10.2 and the TE polarization is coupled to output waveguide 12.2. Conversely, if the following condition is satisfied by waveguides 10 and 12

$$n_{TE12} < (n_{TE10}, n_{TM10}) < n_{TM12}, \quad (2)$$

then the TM polarization would be coupled to output waveguide 12.2 and the TE polarization would be coupled to output waveguide 10.2.

On the other hand, the device of FIG. 1 serves as a TE/TM polarization combiner by simply reversing the direction of the signals; that is, by applying a signal of TE polarization as an input to waveguide 12.2 in section 16 and a signal of TM polarization as an input to waveguide 10.2 in section 16. Under these circumstances the two signals are combined in transition section 18 and propagate out through section 14.

As noted above, however, the device of FIG. 1 also functions as a polarization filter when a signal of TE polarization is applied as an input to waveguide 10.2 in section 16 or a signal of TM polarization is applied as an input to waveguide 12.2 in section 16, or both. Under these circumstances either of the applied signals will be radiated out of the device (i.e., they will not be propagated through it as bound modes) provided that either (1) waveguide 10.2 in section 14 is designed to support only a single (fundamental) mode, as by choosing the refractive index and dimensions so that the top of the potential well of FIG. 6, Part A is at 70'; or (2) if waveguide 10.2 in section 14 supports multiple modes, then by properly coupling this waveguide to a single mode device (such as a single mode fiber) so that only the fundamental mode enters the device (fiber).

To understand the filtering function it will be helpful to define the concept of overall "system" modes as contrasted with individual waveguide modes. System modes require us to view the device as whole and to rank order the modes according to their effective refractive index. An illustration will be instructive. Consider the device of FIG. 6, Parts G and H where the refractive index $n_{TE}$ of four TE modes is plotted against the dimension $x$ for waveguide 12 (Part G) and waveguide 10 (Part H). The TE waveguide modes can be rank ordered as follows: the mode with the highest refractive is the fundamental mode $M_0(12)$ of waveguide 12; the second highest is the fundamental mode $M_0(10)$ of waveguide 10; the third highest is the first-order mode $M_1(12)$, and the lowest is the first-order mode $M_1(10)$. These TE waveguide modes correspond in order to the fundamental, first order, second order and third order TE system modes, as follows:

| TE Waveguide Mode | | TE System Mode |
|:---:|:---:|:---:|
| $M_0(12)$ | ----> | $M_0$ |
| $M_0(10)$ | ----> | $M_1$ |
| $M_1(12)$ | ----> | $M_2$ |
| $M_1(10)$ | ----> | $M_3$ |

This correspondence of waveguide and system modes does not, however, imply equality. That is, a fundamental TE waveguide mode, such as $M_0(10)$, which becomes a higher order TE system mode, such as $M_1$, changes its gaussian shape to dual lobe shape (FIG. 6, Part B) in sections of the device where the waveguides are optically coupled to one another; i.e., in transition section 18 where the waveguides overlap. These transformations are shown in the table above as well as in FIG. 6, Part B which also depicts the TE system mode shapes for $M_0$ to $M_3$.

The three TM waveguide modes of FIG. 6, Parts E and F can be rank ordered in a similar fashion to define corresponding system modes. However, only two TM system modes $M_0$ and $M_1$ are shown in FIG. 6, Part C, to illustrate the fact that the third (and any higher) order mode $M_2$ may be above the top 70 of the potential well and hence is not bound.

A complete understanding of the filtering function also requires an understanding of the nexus between system modes and the adiabatic principle. As described earlier, the latter states that, if the coupling between waveguides is gradual enough, then once a particular system mode is excited anywhere in the device, energy stays in that mode and does convert to a different system mode, even though the waveguide and/or the mode may change shape. For example, suppose the fundamental TE waveguide mode $M_0(10)$ (FIG. 6, Part H) is excited in waveguide 10.2 of section 16. As indicated in the table above, this waveguide mode $M_0(10)$ corresponds to the first order TE system mode $M_1$. When $M_0(10)$ propagates through the adiabatic transition section 18, its gaussian shape (FIG. 6, Part H) converts to the dual lobe shape of the first order TE system mode $M_1$ (FIG. 6, Part B). Note, its characteristic as a first order TE system mode has not changed. Likewise, it remains at first order system mode when it traverses the adiabatic taper 12.6 and exits section 14 as first order TE mode $M_1$ (FIG. 6, Part A). Note, in the section 14, which is a single waveguide, the waveguide modes are identical to the system modes.

When TE system mode $M_1$ enters section 14, it will be propagated if that mode is supported; i.e., if as shown in FIG. 6 the effective refractive index of $M_1$ is below the top 70 of this potential well. On the other hand if it is not, if the effective refractive index is above the top 70′, then $M_1$ will not propagate (i.e., be guided) in the waveguide 10.2 of section 14; rather it will be radiated out of waveguide and no significant amount of energy from $M_1$ will reach port 1. Thus, TE waveguide mode $M_0(10)$ applied as an input to waveguide 10 via port 2 is converted to TE system mode $M_1$, and is effectively filtered. A corresponding filtering action can be made to take place by applying TM waveguide mode $M_0(12)$ as an input to waveguide 12 via port 4.

This aspect of the invention may also be employed in double filtering applications in which, for example, each output branch 10.2 and 12.2 of FIG. 1 would have an overlapping waveguide forming a separate polarization device of the type shown in FIG. 1.

## Example

An illustrative embodiment of the invention for implementation with silicon optical bench technology starts with a silicon substrate 30 (FIGS. 2-4) upon which a silica ($SiO_2$) layer 10.3, 12.3 is deposited by a well-known oxidation technique (e.g., high pressure steam oxidation) to an exemplary thickness in the range of about 10-15 $\mu$m. Subsequently, a silicon nitride layer is deposited by a well-known technique (e.g., low pressure CVD) to an exemplary thickness in the range of about 300-600 Å and is then patterned using standard photolithographic processing to form the thin film cores 12.1 (FIGS. 3,4) of silicon nitride waveguides in desired regions. An exemplary width of the core is in the range of about 4-8 $\mu$m. Next, doped silica is deposited by a likewise well-known technique (e.g., low pressure CVD) to an exemplary thickness in the range of about 2-6 $\mu$m and is then patterned, as above, to form the thin film cores 10.1 (FIGS. 2,4) of the silica waveguides in desired regions. The thickness of the silica core 10.1 and the refractive index of the core 10.1 relative to that of the cladding 10.3 are preferably mutually adapted to insure that the silica waveguides are essentially polarization independent. To this end, the silica core 10.1 is typically doped with phosphorus to an exemplary level in the range of about 4-8 wt % P; this core material is sometimes referred to as phosphosilicate glass or P-glass. Finally, an upper cladding layer 10.4, 12.4 of silica is deposited to a thickness in the exemplary range of about 3-20 $\mu$m using, illustratively, the same technique as that is used for the silica core 10.1. However, the cladding has a phosphorus content in an exemplary range of about 0-2 wt % P and hence has a lower refractive index. Typically, the upper cladding layer 10.4, 12.4 and the silica layer 10.3, which also functions as a (lower) cladding, have about the same refractive index.

Consider the following set of parameters: a P-glass core 10.1 which is 6 $\mu$m wide, 4 $\mu$m thick, and has 6.5 wt % P; a silicon nitride core 12.1 which is 6 $\mu$m wide by 500 Å thick; an upper silica cladding 10.4, 12.4 which is 5 $\mu$m thick and has 0 wt % P; and a lower silica cladding 10.3, 12.3 which is 15 $\mu$m thick. Using the well-known effective refractive index method and $\lambda=1.55$ $\mu$m, we calculate for the P-glass core

$$n_{TM} = 1.4492 \text{ and } n_{TE} = 1.4492 \quad (3)$$

and for the silicon nitride core

$$n_{TM} = 1.4468 \text{ and } n_{TE} = 1.4534 \quad (4)$$

for the fundamental mode in each case. Thus, the refractive indices of the silicon nitride core straddle those of the P-glass core as shown in FIG. 5 and as defined by equation (1). By suitable choice of the thickness (e.g., $d_h$) of the silicon nitride core, the refractive indices of the P-glass core can be made to fall about halfway between those of the silicon nitride core, which is preferred for the reasons noted above. Note also that although a small strain-induced birefringence of the order of 0.0005 has been neglected in the above calculations, the principles remain unchanged.

It is to be understood that the above-described arrangements are merely illustrative of the many possible specific embodiments which can be devised to represent application of the principles of the invention. Numerous and varied other arrangements can be devised in accordance with these principles by those skilled in the art without departing from the spirit and scope of the invention. In particular, in a balanced, polarization independent coherent lightwave receiver, two polarization splitters may be used; after the signal and local oscillator sources are mixed in a 3 dB coupler, the splitters are used to send the mixed signals to different optical detectors for the TE and TM modes. Moreover, while emphasis was placed upon implementation of the invention in silicon optical bench technology, it is readily apparent that Group III-V compound technology can be employed as well. Finally, the 3-port device described above may be incorporated in a 4-port device of the type described below.

4-Port Device

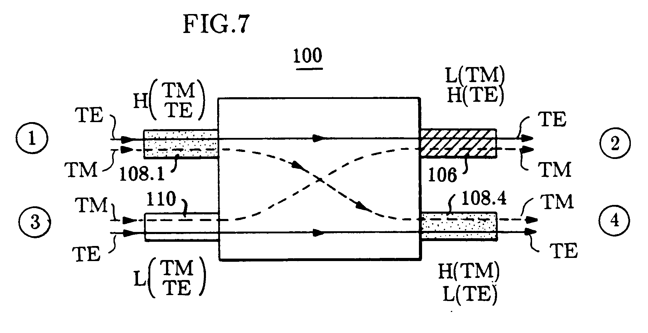

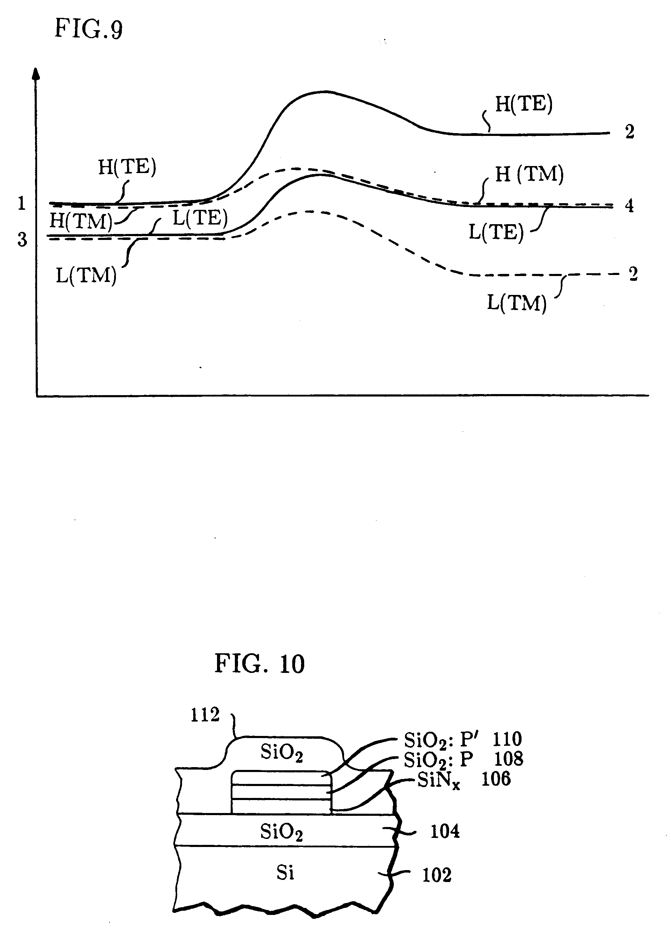

Turning now to FIGS. 7-10, there is shown a 4-port polarization splitting or combining device 100 which is particularly useful in optical circulators. The 4-port device 100 comprises input/output ports 1 and 3 to which waveguides 108.1 and 110 are coupled, and input/output ports 2 and 4 to which waveguides 106 and 108.4 are coupled. Waveguides 106, 108.1 and 108.4 form a 3-port device of the type described earlier with reference to FIGS. 1-6, except for a few differences: (1) ports 2 and 4 have been interchanged (i.e., waveguide 106 has its highest effective refractive index for the fundamental TE mode whereas waveguide 108.4 has its highest index for the fundamental TM mode); (2) the waveguides in the input/output sections 114/116 either support only a single (fundamental) mode or if they support multiple modes, the higher order modes are removed by stripping or by coupling only the fundamental mode to a signal mode device (e.g., fiber) at the output ports; and (3) waveguides 108.1 and 110 are coupled to ports 1 and 3, respectively, and are adiabatically coupled to central section 119. Waveguide 110 has an effective refractive index which is lower than that of waveguide 108.1 for both the TE and TM modes. In contrast, the effective refractive index of waveguide 106 straddles that of waveguide 108.4, as in the 3-port device. These refractive index relationships are depicted in FIG. 9 where the flat sections of the curves correspond to the isolated waveguides and humped sections correspond to the overlapping waveguides. To satisfy the adiabatic principle it is necessary that the pair of solid line curves do not intersect one another over the length of the device. Likewise for the pair of dotted line curves.

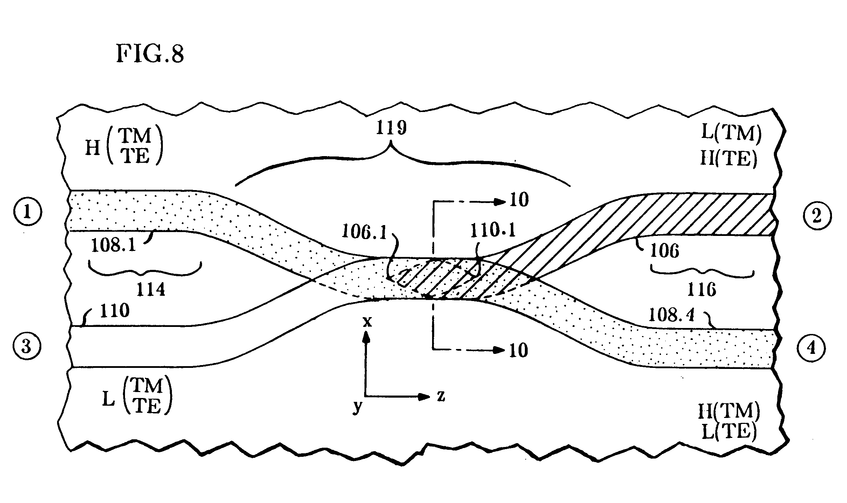

As in FIG. 1, waveguide 106 of FIG. 8 is shown to terminate in an adiabatic taper 106.1 in central region 119. Likewise waveguide 110 is shown to terminate in adiabatic taper 110.1. The tapers are preferred whenever adjacent waveguide cores are made of different materials (e.g., P-glass and $SiN_x$).

The higher (H) and lower (L) refractive index nomenclature of FIGS. 7-8 is defined as follows: (1) any waveguide labeled H excites a fundamental system mode in the central region, whereas any waveguide labeled L excites a first order system mode; (2) waveguide 108.1 labeled H (TM/TE) has higher effective refractive indices for both TM and TE than the corresponding modes in waveguide 110 labeled L(TM/TE); see the left side of FIG. 8; (3) waveguide 106 labeled L(TM) and H(TE) has a lower effective refractive index for the TM mode than waveguide 108.4 labeled H(TM) but a higher effective refractive index for the TE mode than waveguide 108.4 also labeled L(TE); see the right side of FIG. 8. Note that H(TM) and H(TE) may be nearly equal as shown.

This nomenclature is useful in understanding how lightwave signals are routed through the 4-port device. The basic algorithm is as follows: when a signal having a particular polarization (e.g., TE) enters a port labeled H, it will exit from an opposite port also labeled H and supporting the same polarization (i.e., a waveguide designated H(TE)). Conversely, when a signal having a particular polarization enters a port labeled L, it will exit from an opposite port also labeled L and supporting the same polarization. Thus, when a TE signal enters port 4, it is on waveguide 108.4 which is labeled L(TE). This signal will exit from directly opposite port 3 because waveguide 110 is labeled L(TM/TE) which includes L(TE) as well as L(TM). Similarly, when a TM mode enters port 4 on waveguide 108.4 labeled H(TM), it propagates through waveguide 108.1 labeled H(TM/TE) and exits from diagonally opposite port 1.

Conversely, if a signal having a TE mode enters port 1, it exits from directly opposite port 2, but a TM mode entering port 1 crosses over and exits from diagonally opposite port 4. Likewise, when a TE mode enters port 3, it exits from directly opposite port 4, but a TM mode entering port 3 crosses over and exits from diagonally opposite port 2. Which mode is made to cross over, as the TM did in the above example, depends on the design and layout of the waveguides. Merely interchanging waveguide 106 with 108.4 would cause the TE mode to cross over and the TM to pass straight through.

The structure of the waveguides of FIG. 7 is illustrated in the cross-sectional view of FIG. 9 where the cladding layer 112 (omitted in FIG. 7 for clarity) has been added. On silicon substrate 102 a lower silica cladding layer 104 is formed and then the stack of three cores 106 ($SiN_x$ having the highest refractive index of the three), 108 (P-glass having an intermediate refractive index corresponding to waveguides 108.1 and 108.4), and 110 (lower doped P-glass having the lowest refractive index). During fabrication, note that waveguides 110 and 108 may start with the same core, but the phosphorus concentration (and hence the refractive index) of waveguide 110 may be selectively altered by covering waveguide 108 so that during annealing more phosphorus is driven out of the core of 110 than the core of 108. Another possibility is to make waveguide 110 with a relatively thin core of P-glass and to make waveguides 108.1 and 108.4 with a thicker core of P-glass, so that only one P-glass refractive index would be used.

## Claims

1. A device for manipulating the polarization of lightwave signals comprising
   a substrate,
   first and second thin film waveguides (10,12) supported by said substrate,
   said first waveguide having a first core (10.1) and a cladding surrounding said core and said second waveguide having a second core (12.1) and a cladding surrounding said second core, characterized in that:
   said device has a first section (14) which includes said first core (10.2), but not said second core
   said device has a second section (16) wherein said waveguides are optically decoupled and separate from one another,
   said device has a first transition section (18) wherein said first and second cores overlap and then gradually separate so as to adiabatically couple said first section and second sections to one another, said first transition section being capable of supporting more than one transverse mode, and
   said first and second cores (10.1, 12.1) comprise different materials having different effective refractive indices, the refractive indices and dimensions of the cores being mutually adapted so that (1) when radiation is coupled into said first section (18), the TM mode is coupled to the first waveguide (10) in the second section (16) and the TE mode is coupled to the second waveguide (12) in the second section (16), or (2) when a TM mode is coupled into said first waveguide (10) and/or a TE mode is coupled into said second waveguide (12), said mode(s) combine in said transition section (18) and propagate into said first section (14), or (3) when a TM mode is coupled into said second waveguide (12) and/or a TE mode is coupled into said first waveguide (10), said mode(s) radiate out of said transition section (18) so that no significant amount of energy from said modes propagates into said first section (14).

2. The device of claim 1 wherein
   said refractive indices and the dimensions of said cores are mutually adapted so that
   $$n_{TM2} < (n_{TM1}, n_{TE1}) < n_{TE2},$$
   where $\underline{n}$ is the effective refractive index, and TMi and TEi designate the fundamental transverse magnetic and electric waveguide modes in the ith (i=1,2) waveguide.

3. The device of claim 1 wherein said transition section includes a first zone where said waveguides begin to gradually separate from one another, the separation in said first zone following an essentially quadratic or linear relationship with distance along the direction of mode propagation.

4. The device of claim 1 wherein said second core in said transition section has an end sector in the form of a a tip which is adiabatically tapered to essentially zero.

5. The device of claim 4 wherein a dimension of the tip follows an essentially quadratic or linear relationship with distance along the direction of mode propagation.

6. The device of any one of claims 1-5 wherein said first core comprises a first silicon compound and said second core comprises a second silicon compound.

7. The device of claim 6 wherein said first compound comprises doped silica and said second compound comprises silicon nitride.

8. The device of claim 1 further including
   third and fourth thin film waveguides supported by said substrate,
   said third waveguide having a third core and a cladding surrounding said third core,
   said fourth waveguide having a fourth core and a cladding surrounding said fourth core,
   said third and fourth waveguides extending to said first section where they merge and said third and fourth cores overlap,
   said third and fourth waveguides having a third section wherein said third and fourth waveguides are optically decoupled and separate from one another,
   said first section including a second transition section which, together with said first transition section, adiabatically couples said third section and said first section to one another and which is capable of supporting more than one transverse mode, and
   the effective refractive indices and dimensions of said cores being mutually adapted so that (1) the refractive index for the fundamental TM waveguide mode is greater in one of said first and second waveguides than the other, and the refractive index for the fundamental TE waveguide mode is conversely less in the one waveguide than in the other, and (2) the refractive index for both the fundamental TM and TE waveguide modes is greater in one of said third and fourth waveguides than in the other.

9. The device of claim 8 wherein said third core is an extension of said first core.

10. The device of claim 8 wherein said fourth core comprises a material having a refractive index different from said first and second cores.

11. The device of claims 1 or 8 wherein in said first or second transition sections said waveguides gradually separate from one another so as to form an angle therebetween, and in at least an initial region where said waveguides are still optically coupled, said angle is less than about one degree.


**Patentansprüche**

1. Vorrichtung zur Beeinflussung der Polarisation von Lichtwellensignalen, umfassend:
   ein Substrat,
   einen ersten und einen zweiten Dünnfilmwellenleiter (10, 12), die durch das Substrat getragen sind,
   wobei der erste Wellenleiter einen ersten Kern (10.1) und eine den Kern umgebende Ummantelung hat,
   und wobei der zweite Wellenleiter einen zweiten Kern (12.1) und eine den zweiten Kern umgebende Ummantelung hat,
   dadurch gekennzeichnet,
   daß die Einrichtung einen ersten Abschnitt (14) aufweist, der den ersten Kern (10.2), jedoch nicht den zweiten Kern umfaßt,
   daß die Einrichtung einen zweiten Abschnitt (16) hat, bei welchem die Wellenleiter optisch entkoppelt und voneinander getrennt sind,
   wobei die Einrichtung einen ersten Übergangsabschnitt (18) hat, in welchem sich der erste und der zweite Kern überlappen und dann allmählich trennen, um so den ersten und die zweiten Abschnitte aneinander adiabatisch zu koppeln, wobei der erste Übergangsabschnitt mehr als einen transversalen Mode tragen kann,
   wobei der erste und der zweite Kern (10.1, 12.1) verschiedene Materialien mit verschiedenem effektivem Brechungsindex haben, wobei die Brechungsindices und Abmessungen der Kerne wechselseitig so angepaßt sind, daß
   1) wenn Strahlung in den ersten Abschnitt (18) gekoppelt wird, der TM-Mode zum ersten Wellenleiter (10) im zweiten Abschnitt (16) gekoppelt wird, und der TE-Mode zum zweiten Wellenleiter (12) im zweiten Abschnitt (16) gekoppelt wird, oder
   2) wenn ein TM-Mode in den ersten Wellenleiter (10) und/oder ein TE-Mode in den zweiten Wellenleiter (12) gekoppelt wird, die Moden in dem Übergangsabschnitt (18) kombinieren und sich in den ersten Abschnitt (14 oder 13) ausbreiten oder
   3) wenn ein TM-Mode in den zweiten Wellenleiter (12) und/oder ein TE-Mode in den ersten Wellenleiter (10) gekoppelt wird, die Moden aus dem Übergangsabschnitt (18) so abstrahlen, daß sich kein wesentlicher Energiebetrag der Moden in dem ersten Abschnitt (14) ausbreitet.

2. Einrichtung nach Anspruch 1,
   bei welcher die Brechungsindices und die Abmessungen der Kerne wechselweise so angepaßt sind, daß
   $$(n_{TM2} < (n_{TM1}, n_{TE1}) < n_{TE2} ,$$
   wobei n der effektive Brechungsindex und TMi und TEi den fundamentalen, transversalten, magnetischen und elektrischen Wellenleitermode im i-ten (i=1,2) Wellenleiter bezeichnen.

3. Vorrichtung nach Anspruch 1,
   bei welcher der Übergangsabschnitt einen ersten Bereich umfaßt, bei welchem die Wellenleiter allmählich sich voneinander zu trennen beginnen, wobei die Trennung im ersten Bereich einem im wesentlichen quadratischen oder linearen Verhältnis zum Abstand entlang der Richtung der Modenausbreitung folgt.

4. Vorrichtung nach Anspruch 1,
   bei welcher der zweite Kern im Übergangsabschnitt einen Endabschnitt in Form einer Spitze aufweist, die sich adiabatisch auf im wesentlichen Null verjüngt.

5. Vorrichtung nach Anspruch 4,
bei welcher die Abmessung der Spitze einen im wesentlichen quadratischen oder linearen Verhältnis mit dem Abstand entlang der Richtung der Modenausbreitung folgt.

6. Vorrichtung nach einem der Ansprüche 1 bis 5,
bei welcher der erste Kern eine erste Siliciumzusammensetzung und der zweite Kern eine zweite Siliciumzusammensetzung umfaßt.

7. Vorrichtung nach Anspruch 6,
bei welcher die erste Zusammensetzung dotiertes Silica oder Quarzglas und die zweite Zusammensetzung Siliciumnitrid umfaßt.

8. Vorrichtung nach Anspruch 1,
ferner umfassend einen dritten und einen vierten Dünnfilmwellenleiter, der durch das Substrat getragen ist, wobei der dritte Wellenleiter einen dritten Kern und eine den dritten Kern umgebende Ummantelung hat, wobei der vierte Wellenleiter einen vierten Kern und eine den vierten Kern umgebende Ummantelung hat, wobei der dritte und der vierte Wellenleiter sich zum ersten Abschnitt erstrecken, in welchem diese ineinander übergehen und der dritte und der vierte Kern überlappen, wobei der dritte und der vierte Wellenleiter einen dritten Abschnitt haben, in welchem der dritte und der vierte Wellenleiter optisch entkoppelt und voneinander getrennt sind,
wobei der erste Abschnitt einen zweiten Übergangsabschnitt aufweist, der zusammen mit dem ersten Übergangsabschnitt den dritten Abschnitt und den ersten Abschnitt adiabatisch miteinander koppeln und der mehr als einen transversalen Mode tragen kann, und
die effektiven Brechungsindices und Abmessungen der Kerne wechselweise so angepaßt sind, daß
1) der Brechungsindex des fundamentalen TM-Wellenleitermodes in einem von dem ersten und dem zweiten Wellenleiter größer als der andere ist und der Brechungsindex für den fundamentalen TE-Wellenleitermode entgegengesetzt niedriger in dem einen Wellenleiter als in dem anderen ist und
2) der Brechungsindex für beide, den fundamentalen TM- und TE-Wellenleitermode, größer in einem von dem dritten oder vierten Wellenleiter als in dem anderen ist.

9. Vorrichtung nach Anspruch 8,
bei welcher der dritte Kern eine Erweiterung des ersten Kerns ist.

10. Vorrichtung nach Anspruch 8,
bei welcher der vierte Kern ein Material mit einem Brechungsindex umfaßt, der unterschiedlich zu demjenigen des ersten und des zweiten Kerns ist.

11. Vorrichtung nach den Ansprüchen 1 oder 8,
in welcher der erste und der zweite Übergangsabschnitt der Wellenleiter sich allmählich voneinander trennen, um so einen Winkel zwischen diesen auszubilden und wenigstens einen Anfangsbereich, in welchem die Wellenleiter noch optisch gekoppelt sind, wobei der Winkel weniger als ungefähr 1° ist.

**Revendications**

1. Un dispositif pour manipuler la polarisation de signaux consistant en ondes lumineuses, comprenant :
un substrat,
des premier et second guides d'ondes à couches minces (10, 12) supportés par le substrat,
le premier guide d'ondes ayant un premier coeur (10.1) et une gaine entourant ce coeur, et le second guide d'ondes ayant un second coeur (12.1) et une gaine entourant ce second coeur, caractérisé en ce que :
le dispositif comporte une première section (14) qui comprend le premier coeur (10.2), mais non le second coeur,
le dispositif comporte une seconde section (16) dans laquelle les guides d'ondes sont séparés l'un de l'autre et découplés au point de vue optique,
le dispositif comporte une première section de transition (18) dans laquelle les premier et second coeurs se chevauchent et se séparent ensuite progressivement, de façon à coupler mutuellement de façon adiabatique la première section et la seconde section, cette première section de transition étant capable de supporter plus d'un mode transverse, et

les premier et second coeurs (10.1 , 12.1) sont constitués par des matières différentes ayant des indices de réfraction effectifs différents, les indices de réfraction et les dimensions des coeurs étant mutuellement adaptés de façon que (1) lorsqu'un rayonnement est couplé vers la première section (18), le mode TM soit couplé vers le premier guide d'ondes (10) dans la seconde section (16) et le mode TE soit couplé vers le second guide d'ondes (12) dans la seconde section (16), ou (2) lorsqu'un mode TM est couplé vers le premier guide d'ondes (10) et/ou un mode TE est couplé vers le second guide d'ondes (12), ce ou ces modes se combinent dans la section de transition (18) et se propagent vers la première section (14), ou (3) lorsqu'un mode TM est couplé vers le second guide d'ondes (12) et/ou un mode TE est couplé vers le premier guide d'ondes (10), ce ou ces modes rayonnent à l'extérieur de la section de transition (18), de façon qu'aucune quantité notable d'énergie provenant de ces modes ne se propage dans la première section (14).

2. Le dispositif de la revendication 1, dans lequel

les indices de réfraction et les dimensions des coeurs sont mutuellement adaptés de façon que :
$$n_{TM2} < (n_{TM1}, n_{TE1}) < n_{TE2}$$
avec les notations suivantes : $\underline{n}$ est l'indice de réfraction effectif, et TMi et TEi désignent les modes de guide d'ondes fondamentaux transverses magnétique et électrique dans le i-ième (i = 1, 2) guide d'ondes.

3. Le dispositif de la revendication 1, dans lequel la section de transition comprend une première zone dans laquelle les guides d'ondes commencent à se séparer progressivement l'un de l'autre, la séparation dans cette première zone s'effectuant selon une relation fondamentalement quadratique ou linéaire en fonction de la distance dans la direction de propagation des modes.

4. Le dispositif de la revendication 1, dans lequel le second coeur dans la zone de transition présente une partie d'extrémité ayant la forme d'une pointe qui va en diminuant de façon adiabatique pratiquement jusqu'à zéro.

5. Le dispositif de la revendication 4, dans lequel une dimension de la pointe suit une relation fondamentalement quadratique ou linéaire en fonction de la distance dans la direction de propagation des modes.

6. Le dispositif de l'une quelconque des revendications 1 à 5, dans lequel le premier coeur comprend un premier composé de silicium et le second coeur comprend un second composé de silicium.

7. Le dispositif de la revendication 6, dans lequel le premier composé consiste en silice dopée et le second composé consiste en nitrure de silicium.

8. Le dispositif de la revendication 1, comprenant en outre

des troisième et quatrième guides d'ondes à couches minces supportés par le substrat,

le troisième guide d'ondes ayant un troisième coeur et une gaine qui entoure ce troisième coeur,

le quatrième guide d'ondes ayant un quatrième coeur et une gaine qui entoure ce quatrième coeur,

les troisième et quatrième guides d'ondes s'étendent vers la première section dans laquelle ils se réunissent et les troisième et quatrième coeurs se chevauchent ,

les troisième et quatrième guides d'ondes ayant une troisième section dans laquelle ces troisième et quatrième guides d'ondes sont séparés l'un de l'autre et découplés au point de vue optique,

la première section comprenant une seconde section de transition qui, conjointement à la première section de transition, couple mutuellement de façon adiabatique la troisième section et la première section, et qui est capable de supporter plus d'un mode transverse, et

les indices de réfraction effectifs et les dimensions des coeurs étant mutuellement adaptés de façon que (1) l'indice de réfraction pour le mode de guide d'ondes TM fondamental soit plus élevé dans l'un des premier et second guides d'ondes que dans l'autre, et l'indice de réfraction pour le mode de guide d'ondes TE fondamental soit, inversement, plus faible dans le guide d'ondes mentionné en premier que dans l'autre, et (2) l'indice de réfraction pour les deux modes de guide d'ondes TM et TE fondamentaux soit plus élevé dans l'un des troisième et quatrième guides d'ondes que dans l'autre.

9. Le dispositif de la revendication 8, dans lequel le troisième coeur est un prolongement du premier coeur.

10. Le dispositif de la revendication 8, dans lequel le quatrième coeur comprend une matière ayant un indice de réfraction qui est différent de celui des premier et second coeurs.

11. Le dispositif des revendications 1 ou 8, dans lequel dans les première ou seconde sections de transition, les guides d'ondes se séparent progressivement l'un de l'autre, de façon à former un angle entre eux, et au moins dans une région initiale dans laquelle les guides d'ondes sont encore en couplage optique, cet angle est inférieur à environ un degré.

FIG. 1

FIG. 2

<u>10</u>

SiO$_2$ — 10.1

SiO$_2$:P — 10.4

SiO$_2$ — 10.3

Si — 30

FIG. 3

SiN$_x$ 12.1

SiO$_2$ — 12.4

SiO$_2$ — 12.3

Si — 30

FIG. 4

10.4, 12.4

SiN$_x$ 12.1

SiO$_2$

10.1

SiO$_2$:P

SiO$_2$

Si — 30

# FIG. 5

# FIG.6

FIG.7

FIG.8

## FIG.9

## FIG. 10

FIG. 11

PART A

PART B

100%

ABRUPT

V

0%

10%

40%

50%

V

FIG. 12

PART A

PART B

100%

GRADUAL
(ADIABATIC)

V

0%

0%

0%

100%

V

FIG. 13

PART A

PART B

100%

TRANSITION

n

$M_1$

$M_0$

$n_1$

$n_0$

n

Y

X

Z